# EUROPÄISCHE PATENTSCHRIFT

(11) **EP 2 165 001 B1**
(45) Veröffentlichungstag und Bekanntmachung des Hinweises auf die Patenterteilung: **16.11.2016**
(21) Anmeldenummer: 08773450.5
(22) Anmeldetag: 16.06.2008
(51) Int. Cl.: C23C 8/24, C23C 8/30, C23C 8/36, C23C 8/80, B24B 39/04

(54) **VERFAHREN UND VORRICHTUNG ZUR ERHÖHUNG DER FESTIGKEIT EINES BAUTEILS**
METHOD AND APPARATUS FOR INCREASING THE STRENGTH OF A PART
PROCÉDÉ ET APPAREIL POUR AUGMENTER LA DURETÉ D'UNE PIÈCE

(30) Priorität: 20.06.2007 DE 102007028888
(43) Veröffentlichungstag der Anmeldung: 24.03.2010
(73) Patentinhaber: Maschinenfabrik Alfing Kessler GmbH, 73433 Aalen (DE)
(72) Erfinder: REEB, Alfons, 73434 Aalen (DE); SCHMIDT, Jochen, 73529 Schwäbisch Gmünd (DE)
(74) Vertreter: Schmid, Wolfgang
(86) Internationale Anmeldenummer: PCT/EP2008/004814
(87) Internationale Veröffentlichungsnummer: WO 2008/155079

(56) Entgegenhaltungen:
- EP-A- 1 211 026
- DE-A1- 2 141 175
- JP-A- 2007 030 115

## Beschreibung

Die Erfindung betrifft ein Verfahren zur Erhöhung der Festigkeit eines auf Torsion und Biegung beanspruchten Bauteils, insbesondere einer Kurbelwelle. Des weiteren betrifft die Erfindung eine Vorrichtung zur mechanischen Verfestigung eines auf Torsion und Biegung beanspruchten Bauteils, insbesondere einer Kurbelwelle.

Da Brennkraftmaschinen im Laufe ihrer Entwicklung aufgrund der ständig zunehmenden Leistungssteigerung immer stärker beansprucht werden, stellt die Motorenindustrie gerade an die für die sehr hoch belastete und für die Funktion einer Brennkraftmaschine äußerst wichtige Kurbelwelle sehr hohe Anforderungen hinsichtlich der Festigkeit, wobei aufgrund des äußerst kritischen Platzbedarfs die Kurbelwelle trotz der Leistungserhöhungen nur unwesentlich größer werden sollte. Für die Auslegung der Kurbelwelle bedeutet dies, dass eine Erhöhung der Beanspruchbarkeit nicht über die Erhöhung des Querschnitts, also über das Widerstandsmoment der Kurbelwelle, sondern möglichst über lokale Spannungszustände erzielt werden sollte. Aus diesem Grund werden moderne Kurbelwellen unter Verwendung der verschiedensten Bearbeitungs- und Warmbehandlungsverfahren hergestellt, so dass die Kurbelwellen immer höheren Motorleistungen ausgesetzt werden können.

Bespiele für solche Verfahren sind thermische Behandlungen, wie die Oberflächenhärteverfahren Induktions- und Einsatzhärten, Laserhärten oder Nitrieren, sowie Kaltverfestigungsverfahren, wie Festwalzen, Kugelstrahlen und Schlagverfestigen. Hierbei handelt es sich um gängige und zum großen Teil ausgereifte Verfahren, die für die verschiedensten Einsatzzwecke geeignet sind. Hinsichtlich Beispielen für solche Verfahren wird auf folgende Druckschriften verwiesen: EP 1 479 480 A1, EP 0 788 419 B1, EP 1 149 663 A1, DE 43 28 598 A1, WO 2005/063438, EP 1 112 146 B1, JP 04198463 A, JP 2001254143 A, EP 1 612 290 A1, DE 10 2004 008728 B4.

Ein Nitrierverfahren, wie es beispielsweise in der EP 1 612 290 A1 beschrieben ist, bringt bei der Verwendung an einer Kurbelwelle den Vorteil mit sich, dass sowohl der gesamte äußere Bereich der Kurbelwelle als auch innere Bereiche, wie Bohrungen und dergleichen, mit einer Oberflächennitrierschicht umschlossen werden. Diese Nitrierschicht kann je nach angewendetem Verfahren eine Tiefe von bis zu 0,8 mm aufweisen. Der Vorteil einer solchen Nitrierschicht besteht in der Einbeziehung von verschiedensten Kerben, oberflächennahen Materialeinschlüssen außerhalb der Lagerflächen und Übergangsradien, wodurch gerade diese Bauteilbereiche durch verfahrensbedingt eingelagerte Druckeigenspannungen als beanspruchungskritische Bereiche entschärft werden. Dadurch kann insgesamt eine höhere Beanspruchbarkeit der Kurbelwelle erreicht werden. Insbesondere bei hohen Torsionsbelastungen, die bei Kurbelwellen typisch sind, bringt ein solches Nitrierverfahren sehr gute Ergebnisse, insbesondere hinsichtlich der Dauerfestigkeit. Im Vergleich zu der ebenfalls bestehenden und teilweise auch eingesetzten Möglichkeit, hochlegierter Stähle zur Herstellung der Kurbelwelle einzusetzen, handelt es sich beim Nitrieren zudem um ein relativ kostengünstiges Verfahren.

Nachteilig bei solchen Nitrierbehandlungen an torsions- und biegebeanspruchten Bauteilen ist jedoch häufig die im Vergleich zu anderen Oberflächenbearbeitungsverfahren geringere Tiefenwirkung in Kerbbereichen. Bei vielen hoch beanspruchten Bauteilen, wie beispielsweise bei Kurbelwellen, wird jedoch gerade in den Übergangsbereichen zwischen den Lagern und den Kurbelwangen eine solche Tiefenwirkung erwünscht, da auf diese Weise im Lastfall größere Biegespannungen zugelassen werden können.

Bei der Auslegung einer hoch beanspruchten Kurbelwelle war es daher in der Vergangenheit häufig notwendig, eine Abwägung darüber zu treffen, ob die Biege- oder die Torsionsbeanspruchung die geringeren Reserven beinhaltet, und abhängig von dieser Abwägung wurde dann ein geeignetes Verfahren zur Erhöhung der Festigkeit der Kurbelwelle ausgewählt.

Wenn die Entscheidung über die Bearbeitung des Bauteils nicht auf ein Nitrierverfahren fiel, wurde häufig auf hochwertigere und höher vergütete Werkstoffe zurückgegriffen, um die geringere Torsionsdauerfestigkeit auszugleichen. Dies führte meist zu einer gerade im Automobilbau nicht erwünschten Kostensteigerung.

Ein gattungsgemäßes Verfahren zur Verfestigung von Kurbelwellen ist aus der DE 2 141 175 A1 bekannt.

Aus der EP 1 112 146 B1 ist eine Vorrichtung zum Festwalzen von Kurbelwellen gemäß dem Oberbegriff von Anspruch 11 bekannt. Hierbei wird die durch den Festwalzkopf aufgebrachte Kraft von zwei Stützrollen aufgenommen, wobei eine axiale Führung durch eine Axialführungsrolle gegeben ist.

Es ist Aufgabe der vorliegenden Erfindung, ein Verfahren zur Erhöhung der Festigkeit eines auf Torsion und Biegung beanspruchten Bauteils zu schaffen, welches eine hohe Torsionsdauerfestigkeit und eine hohe Tiefenwirkung in Kerbbereichen zur Erzielung einer hohen Biegedauerfestigkeit ermöglicht und dennoch den Einsatz verhältnismäßig kostengünstiger Werkstoffe erlaubt.

Erfindungsgemäß wird diese Aufgabe durch die in Anspruch 1 genannten Merkmale gelöst.

Gemäß der vorliegenden Erfindung wird also in einem ersten Schritt im Wesentlichen das gesamte Bauteil nitriert, wodurch dem Bauteil die Vorteile verliehen werden, die sich aus dieser Oberflächenbehandlung ergeben, nämlich insbesondere die hohe Oberflächenhärte, die guten Laufeigenschaften und die hohe Torsionsdauerfestigkeit. Durch die anschließende erfindungsgemäße zumindest teilweise Entfernung der Nitrierschicht in den auf Biegespannung hoch beanspruchten Bereichen des Bauteils und der darauffolgenden mechanischen Kaltverfestigung dieser hoch beanspruchten Bereiche wird des weiteren eine erhebliche Steigerung der Festigkeit dieser Kerbbereiche erreicht, insbesondere was deren Biegebeanspruchbarkeit anbelangt. Dadurch ist es vorteilhafterweise möglich, zur Herstellung des Bauteils weniger hoch vergütete Werkstoffe einzusetzen und dennoch ein torsions- und biegebeanspruchtes Bauteil zu erhalten, welches in der Lage ist, sämtlichen kritischen Belastungen, die im Gebraucht auftreten, Stand zu halten. Die bei der Kaltverfestigung auf das Bauteil aufgebrachte Kraft kann dabei an die jeweiligen Gegebenheiten, insbesondere an die zu erwartenden Beanspruchungen beim Einsatz des Bauteils, angepasst werden.

Durch die erfindungsgemäße Entfernung der Nitrierschicht vor dem Kaltverfestigen der hoch beanspruchten Bereiche des Bauteils mittels einer spanabhebenden Bearbeitung wird sichergestellt, dass die Nitrierschicht bei der nachfolgenden Kaltverfestigung nicht beschädigt wird, insbesondere dass sich keine Risse in derselben bilden, wie dies der Fall wäre, wenn die Kaltverfestigung an einem mit der Nitrierschicht versehenen Bereich des Bauteils durchgeführt werden würde.

Insgesamt handelt es sich somit um ein Verfahren, mit dem sehr flexibel auf die jeweils zu erwartenden Beanspruchungen des Bauteils eingegangen werden kann, wodurch sich neue Gestaltungsmöglichkeiten bei der Konstruktion von auf Torsion und Biegung beanspruchter Bauteile ergeben.

Eine alternative Lösung der Aufgabe ergibt sich aus Anspruch 2.

Um eine Endbearbeitung des Bauteils in den hoch belasteten Bereichen zu vermeiden, ist dabei vorgesehen sein, dass zusätzlich zu der Nitrierschicht auch weiteres Material des Bauteils entfernt wird, um in dem wenigstens einen hochbelasteten Bereich eine Hinterschneidung zu bilden.

In einer sehr vorteilhaften Weiterbildung des erfindungsgemäßen Verfahrens kann vorgesehen sein, dass nach der mechanischen Kaltverfestigung eine Endbearbeitung des Bauteils hinsichtlich dessen Lage- und/oder Maßtoleranzen erfolgt. Auf diese Weise erhält man ein direkt einsetzbares, maßgenaues Bauteil.

In einer weiteren vorteilhaften Ausgestaltung der Erfindung kann vorgesehen sein, dass die mechanische Kaltverfestigung mittels Festwalzen durchgeführt wird. Hierdurch ergibt sich neben der Erhöhung der Festigkeit eine sehr gute Oberfläche des verfestigten Bereichs. Alternativ hierzu ist es auch möglich, dass die mechanische Kaltverfestigung mittels Schlagverfestigen oder mittels Kugelstrahlen durchgeführt wird.

Das erfindungsgemäße Verfahren ist besonders dann vorteilhaft einzusetzen, wenn als das auf Torsion und Biegung beanspruchte Bauteil eine Kurbelwelle, insbesondere eine besonders hoch beanspruchte Kurbelwelle, verwendet wird.

In diesem Zusammenhang kann außerdem vorgesehen sein, dass der wenigstens eine hoch beanspruchte Bereich ein Übergangsbereich von einem Hauptlager oder Pleuellager zu einer Kurbelwelle ist.

In Anspruch 11 ist eine Vorrichtung zur mechanischen Verfestigung eines auf Torsion und Biegung beanspruchten Bauteils angegeben.

Diese Vorrichtung eignet sich besonders zur Durchführung des dritten Schritts des erfindungsgemäßen Verfahrens, nämlich der mechanischen Kaltverfestigung der hoch beanspruchten Bereiche des Bauteils. Hierbei ist auch bei geringfügigen Schrägstellungen des Verfestigungswerkzeug sichergestellt, dass Kantenpressungen auf die Nitrierschicht und damit eventuelle Beschädigungen derselben verhindert werden.

In einer besonders vorteilhaften Ausgestaltung dieser Vorrichtung kann vorgesehen sein, dass das wenigstens eine Verfestigungswerkzeug Verfestigungswalzen aufweist.

Weitere vorteilhafte Ausgestaltungen und Weiterbildungen der Erfindung ergeben sich aus den restlichen Unteransprüchen. Nachfolgend sind Ausführungsbeispiele der Erfindung anhand der Zeichnung prinzipmäßig dargestellt.

Es zeigt:
- Fig. 1: eine stark schematisierte Ansicht einer Kurbelwelle;
- Fig. 2: ein Teil der Kurbelwelle aus Fig. 1 als ein auf Torsion und Biegung belastetes Bauteil, an dem ein erster Schritt des erfindungsgemäßen Verfahrens durchgeführt wurde;
- Fig. 3: die Kurbelwelle aus Fig. 2 in einem zweiten Verfahrensschritt;
- Fig. 4: eine vergrößerte Darstellung des zweiten Verfahrensschritts;
- Fig. 5: die Kurbelwelle aus Fig. 2 in einem dritten Verfahrensschritt unter Verwendung einer erfindungsgemäßen Vorrichtung;
- Fig. 6: den Verfahrensschritt aus Fig. 5 mit einer alternativ ausgestalteten Vorrichtung; und
- Fig. 7: eine weitere alternative Ausführungsform der Vorrichtung zur Durchführung des dritten Schrittes des erfindungsgemäßen Verfahrens.

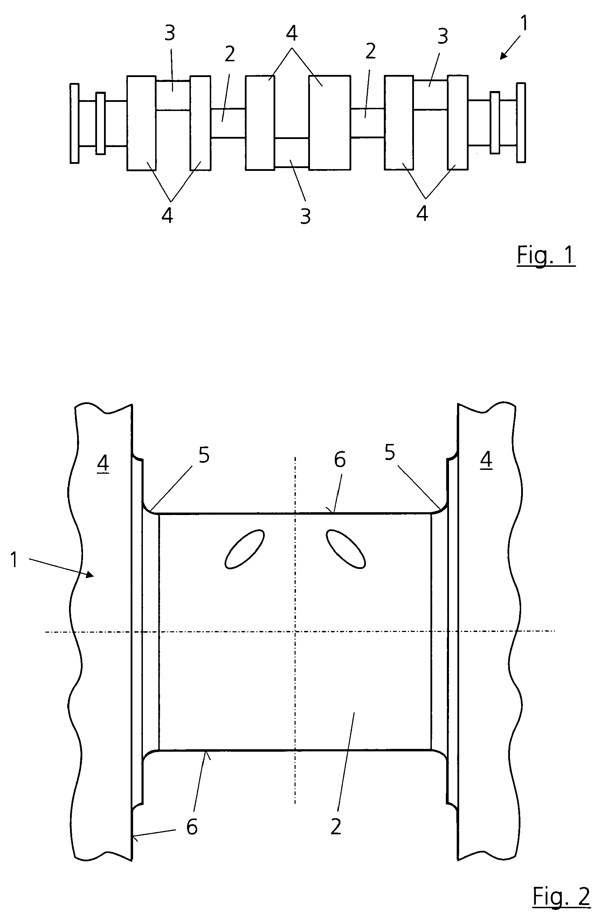

Fig. 1 zeigt eine stark schematisierte Ansicht einer Kurbelwelle 1, die in an sich bekannter Weise mehrere Hauptlager 2 aufweist, über welche sie innerhalb eines nicht dargestellten Kurbelgehäuses einer Brennkraftmaschine gelagert ist. Bei der Kurbelwelle 1 kann es sich sowohl um eine in einem Kraftfahrzeug eingesetzte als auch um eine sehr große, beispielsweise in Schiffsantrieben verwendete Kurbelwelle 1 handeln. Zwischen den Hauptlagern 2 befinden sich jeweilige Pleuellager 3, an denen ebenfalls nicht dargestellte Pleuel der Brennkraftmaschine anbringbar sind. In an sich bekannter Weise wird die Anzahl der Hauptlager 2 und der Pleuellager 3 durch die Anzahl der Zylinder der Brennkraftmaschine bestimmt. Zwischen den Hauptlagern 2 und den Pleuellagern 3 befinden sich jeweils sogenannte Kurbelwangen 4, die die radiale Distanz zwischen den Hauptlagern 2 und den Pleuellagern 3 überbrücken. Der Übergangsbereich von den Kurbelwangen 4 zu den Hauptlagern 2 bzw. den Pleuellagern 3 ist bei der Kurbelwelle 1 im Allgemeinen jeweils ein sehr hoch beanspruchter Bereich 5, also ein Bereich, in dem die Kurbelwelle 1 im Betrieb sehr hohe Kräfte aufnehmen muss. Um auch in diesen hoch beanspruchten Bereichen 5 eine ausreichende Festigkeit der Kurbelwelle 1 zu erreichen, wurde ein nachfolgend detaillierter beschriebenes Verfahren entwickelt. Statt an der Kurbelwelle 1 kann das Verfahren prinzipiell auch an einem anderen Bauteil durchgeführt werden, das auf Torsion und Biegung beansprucht wird und dessen Festigkeit mittels dieses Verfahrens erhöht werden soll.

In einem ersten Schritt dieses Verfahrens wird die gesamte Kurbelwelle 1, von der in Fig. 2 lediglich eines der Hauptlager 2 und Teile der sich daran anschließenden Kurbelwangen 4 dargestellt ist, nitriert, d. h. mit einer Nitrierschicht 6 versehen, die sich über die gesamte Kurbelwelle 1 erstreckt. Die Nitrierschicht 6 kann beispielsweise mittels Gasnitrieren, mittels Nitrocarburieren oder mittels Plasmanitrieren aufgebracht werden. Diese Nitrierschicht 6 bezieht auch verschiedenste, nicht dargestellte Kerben, oberflächennahe Materialeinschlüsse sowie Schmierölbohrungen und dergleichen ein. Auf diese Weise erhöht die Nitrierschicht 6 die Tragfähigkeit und die Torsionssteifigkeit der Kurbelwelle 1 und verringert die potenzielle Abnutzung der Oberfläche aufgrund der erhöhten Oberflächenhärte. Die Vorteile der Nitrierbehandlung ergeben sich besonders bei Kurbelwellen 1, die relativ schmale Kurbelwangen 4 aufweisen, da diese besonders stark auf Torsion beansprucht sind.

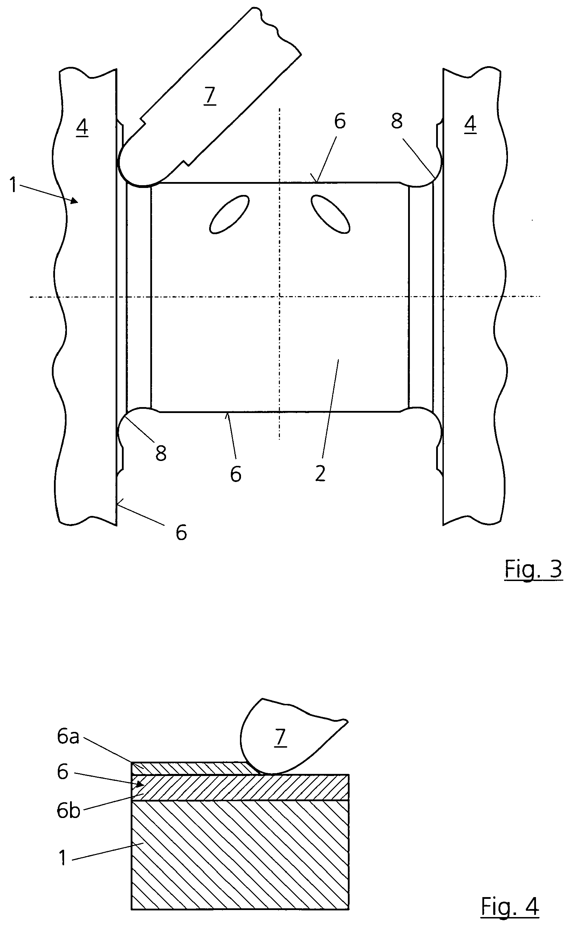

Da sich gerade in den hoch beanspruchten Bereichen 5 am Übergang zwischen dem Hauptlager 2 bzw. dem in Fig. 2 nicht dargestellten Pleuellager 3 zu den Kurbelwangen 4 durch die Nitrierschicht 6 nur eine verhältnismäßig geringe Tiefenwirkung ergibt, wird in einem zweiten, in Fig. 3 dargestellten Verfahrensschritt mittels einer spanabhebenden Bearbeitung in dem hoch beanspruchten Bereich 5 der Kurbelwelle 1 die Nitrierschicht 6 entfernt. Diese spanabhebende Bearbeitung, für welche ein nur schematisch angedeutetes Bearbeitungswerkzeug 7 eingesetzt wird, kann beispielsweise mittels Drehen, Fräsen oder Schleifen erfolgen. Zusätzlich zu der Nitrierschicht 6, die selbstverständlich einen Teil der Kurbelwelle 1 bildet, kann auch weiteres, also nicht zu der Nitrierschicht 6 gehörendes Material der Kurbelwelle 1 entfernt werden, um in dem hoch beanspruchten Bereich 5 eine Hinterschneidung 8 zu bilden, welche sowohl radial als auch axial vorgesehen sein kann. Dies ist jedoch abhängig von der Konstruktion der Kurbelwelle 1 und nicht in jedem Fall erforderlich. Der hoch beanspruchte Bereich 5 zwischen dem Hauptlager 2 bzw. dem Pleuellager 3 und der zugehörigen Kurbelwange 4 ist im vorliegenden Fall jeweils mit einem Radius versehen bzw. als Radius ausgeführt. Unabhängig davon, ob zusätzlich zu der Nitrierschicht 6 auch Material der Kurbelwelle 1 abgetragen wird oder nicht, kann der Übergang zwischen dem Hauptlager 2 bzw. dem Pleuellager 3 und der Kurbelwange 4 nach der Bearbeitung als in die jeweilige Fläche tangierender Übergangsradius ausgeführt sein.

In Fig. 4 ist die Nitrierschicht 6 vergrößert dargestellt und es ist erkennbar, dass diese eine die äußere Oberfläche bildende Verbindungsschicht 6a und eine darunterliegende, an das restliche Material der Kurbelwelle 1 angrenzende Diffusionsschicht 6b aufweist. Im Gegensatz zu der oben beschriebenen vollständigen Entfernung der Nitrierschicht 6, bei der auch die Hinterschneidung 8 erzeugt werden kann, wird hierbei lediglich die Verbindungsschicht 6a entfernt, was eine zusätzliche Bedeutung der Angabe "zumindest teilweise Entfernung der Nitrierschicht 6" zu der oben angegebenen Entfernung der Nitrierschicht 6 lediglich in dem hoch beanspruchten Bereich 5 darstellt. Demnach ist es möglich, lediglich die Verbindungsschicht 6a der Nitrierschicht 6 lediglich in dem hoch beanspruchten Bereich 5 zu entfernen. Eine weitere Möglichkeit besteht darin, zusätzlich zu der Verbindungsschicht 6a auch einen Teil der Dicke der Diffusionsschicht 6b abzutragen.

In dem dritten Schritt des Verfahrens, der in Fig. 4 dargestellt ist, wird der hoch beanspruchte Bereich 5 mittels einer Vorrichtung 9, die ein Verfestigungswerkzeug 10 aufweist, in denjenigen Bereichen, in denen zuvor die Nitrierschicht 6 entfernt wurde, mechanisch kalt verfestigt. Bei der mechanischen Kaltverfestigung in dieser Ausgestaltung des Verfahrens handelt es sich um Festwalzen. Alternativ ist auch eine mechanische Kaltverfestigung mittels Schlagverfestigen oder Kugelstrahlen denkbar. Bei der Kaltverfestigung mittels Festwalzen oder Schlagverfestigen wird eine definierte Kraft auf das Bauteil aufgebracht, wohingegen beim Kugelstrahlen durch die auf die Kurbelwelle 1 einwirkenden Kugeln eine undefinierte Kraftwirkung aufgebracht wird.

Durch die Kaltverfestigung wird in Abhängigkeit von der aufgebrachten Kraft und der Dauer der Bearbeitung eine erheblich höhere Tiefenwirkung der Spannungen und der sich daraus ergebenden Festigkeitserhöhung sowie eine Erhöhung der Oberflächenhärte gegenüber dem Zustand, in dem die Kurbelwelle 1 nur nitriert ist, erreicht.

Bei der Kaltverfestigung ist es möglich, eine derart hohe Kraft auf die Kurbelwelle 1 aufzubringen, dass sich auf der Oberfläche derselben sehr feine Anrisse ergeben, die jedoch die Festigkeitseigenschaften der Kurbelwelle 1 nicht negativ beeinflussen, da sie sich aufgrund der eingebrachten Druckeigenspannungen nicht ausbreiten können. Vielmehr wird durch diese Erhöhung der Festwalzkraft eine noch höhere Dauerfestigkeit der Kurbelwelle 1 erreicht, die durch die Anrisse nicht verringert wird. Diese Erhöhung der Verfestigungskraft, die zur Bildung der Anrisse führt, kann dabei bis zu 40% über der üblicherweise durch Festwalzen aufgebrachten Kraft liegen, was vorteilhafterweise angewendet wird, um die Dauerfestigkeit der Kurbelwelle 1 zu erhöhen.

Diese Vorgehensweise einer solchen derartigen Erhöhung der Kaltverfestigungskraft, dass auf der Oberfläche der Kurbelwelle 1 Anrisse entstehen, ist auch bei Kurbelwellen 1 denkbar, die statt durch Nitrieren beispielsweise durch Induktionshärten oder ein anderes geeignetes Verfahren wärmebehandelt werden.

Nach der mechanischen Kaltverfestigung ist es möglich, eine Endbearbeitung der Kurbelwelle 1 hinsichtlich ihrer Lage- und/oder Maßtoleranzen durchzuführen, was vorzugsweise mittels Schleifen erfolgt. Dies ist auch in den nachträglichen kalt verfestigten, hoch beanspruchten Bereichen 5 möglich. Eine solche Nachbearbeitung der Oberfläche der Hauptlager 2 und/oder der Pleuellager 3 und/oder der Kurbelwangen 4 kann sich in manchen Fällen auch auf eine reine Verringerung der Oberflächenrauheit beschränken, wenn mit dem Nitrierverfahren eine ausreichende Genauigkeit der Form- und Lagetoleranzen erreicht wird bzw. erhalten bleibt.

Dadurch, dass die hoch beanspruchten Bereiche 5 mit einem tiefenwirksamen Kaltverfestigungsverfahren verfestigt worden sind, kann an den eventuell nachzubearbeitenden zylindrischen Flächen des Hauptlagers 2 bzw. des Pleuellagers 3 und den Anlaufbundflächen der Kurbelwangen 4 ein größerer Abtrag an der Nitrierschicht 6 für die maß- und lagehaltige Endbearbeitung zugelassen werden. Auch die oben beschriebene eventuelle Erzeugung der Hinterschneidung 8 ermöglicht vorteilhafterweise eine einfachere maß- und lagehaltige Endbearbeitung, beispielsweise durch Schleifen.

Auch die durch die Kaltverfestigung bearbeiteten, hoch beanspruchten Bereiche 5 der Kurbelwelle 1 können noch mit einem spanabhebenden Verfahren bearbeitet werden. Dabei hängt die Menge des abgetragenen Materials, also die Tiefe der spanabhebenden Bearbeitung, von der zuvor erreichten Tiefenwirkung mittels des Kaltverfestigens ab, so dass bei einer entsprechend hohen, durch das Kaltverfestigen erzielten Tiefenwirkung von beispielsweise 1 mm durchaus 0,2 bis 0,4 mm Materials der Kurbelwelle 1 abgetragen werden können. Wenn die oben angedeutete Hinterschneidung 8 vorgesehen ist, so ist bei der mechanischen Nachbearbeitung der Kurbelwelle 1 in diesem Bereich keine Nacharbeit erforderlich.

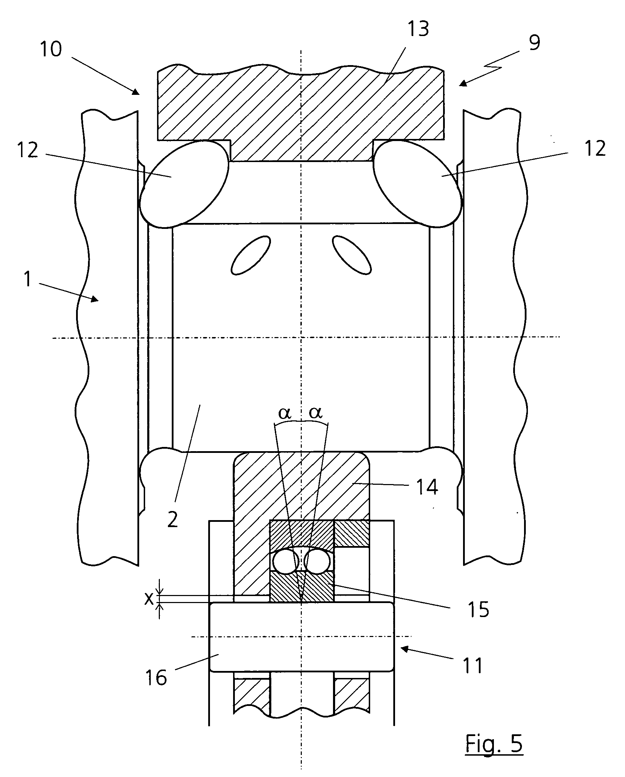

Fig. 5 zeigt eine erste Ausführungsform der Vorrichtung 9 zur mechanischen Kaltverfestigung des auf Torsion und Biegung beanspruchten Bauteils, im vorliegenden Fall der Kurbelwelle 1. Die Vorrichtung 9 weist das zur Aufbringung der Kraft auf die Kurbelwelle 1 geeignete Verfestigungswerkzeug 10 und eine die Kraft des Verfestigungswerkzeugs 10 aufnehmende Gegenhalteeinrichtung 11 auf. Durch die Gegenhalteeinrichtung 11 werden wie nachfolgend beschrieben Beschädigungen der sich noch auf dem Hautlager 2 bzw. im Falle des Pleuellagers 3 sich auf demselben befindlichen Nitrierschicht 6 verhindert.

Das Verfestigungswerkzeug 10 ist im vorliegenden Fall als Festwalzwerkzeug ausgebildet und weist mehrere Verfestigungswalzen 12 auf, die auf einer Führungsrolle 13 drehbar gelagert sind und dazu dienen, die hoch beanspruchten Bereiche 5 der Kurbelwelle 1 kalt zu verfestigen, also wie bereits erwähnt den dritten Schritt des oben beschriebenen Verfahrens auszuführen.

Die Gegenhalteeinrichtung 11 weist eine mit dem Hauptlager 2 in Verbindung stehende Laufrolle 14 auf, die über eine Lagereinrichtung 15 auf einem Lagerbolzen 16 gelagert ist. Die Lagereinrichtung 15 lagert auf diese Weise die Gegenhalteeinrichtung 11 derart, dass diese in der Lage ist, auch Kräfte aufzunehmen, die in einem von 90° verschiedenen Winkel auf die Oberfläche der Kurbelwelle 1, im vorliegenden Fall auf das Hauptlager 2, wirken. Zu diesem Zweck ist die Lagereinrichtung 15 im vorliegenden Fall als Pendelkugellager ausgebildet, es könnte sich jedoch auch um ein Pendelrollenlager oder um eine andere, in der beschriebenen Art und Weise die schräg wirkenden Kräfte aufnehmende Lagereinrichtung 15 handeln. In Fig. 5 ist mit dem Winkel α die geforderte mögliche Pendelausgleichsbewegung bei einer Schrägstellung des Verfestigungswerkzeuges 10 dargestellt. Im allgemeinen, d.h. auch bei den später noch beschriebenen Ausführungsformen des Verfestigungswerkzeuges 10, kann der Winkel α bis zu 15° betragen, wobei Schrägstellung von maximal bis zu 5 - 10° wahrscheinlicher sind. Das Maß "x" zeigt den für diese Bewegung der Führungsrolle 13 erforderlichen Abstand zwischen der Führungsrolle 13 und dem Lagerbolzen 16.

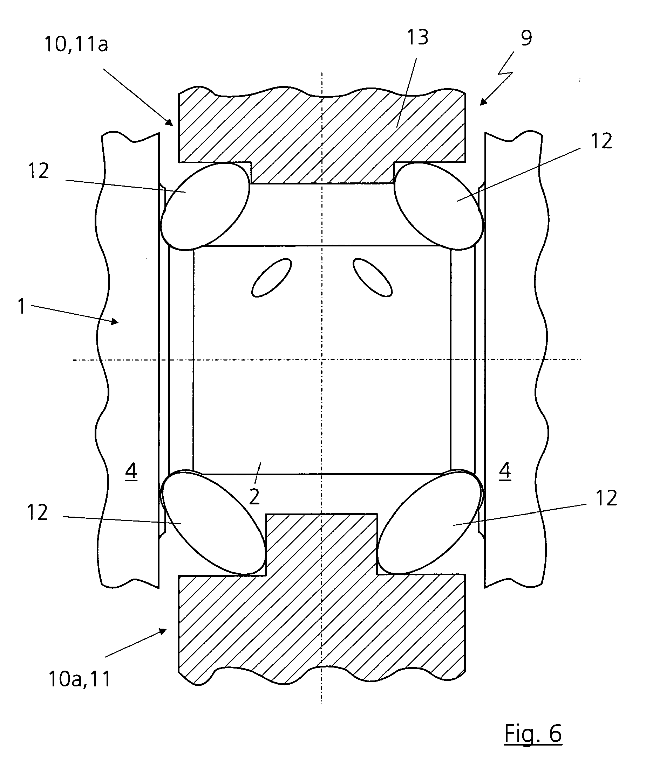

In Fig. 6 ist eine weitere Ausführungsform der Vorrichtung 9 dargestellt. Hierbei sind zwei Verfestigungswerkzeuge 10 vorgesehen, die jeweilige Verfestigungswalzen 12 aufweisen und im wesentlichen um 180° gegenüber einander versetzt sind. Hierbei übernimmt jeweils das eine Verfestigungswerkzeug 10 die Funktion der Gegenhalteeinrichtung 11 für das andere Verfestigungswerkzeug 10a, wobei sie jedoch berührungsfrei und somit kraftfrei auf die Fläche des Hauptlagers 2 wirken. Diese Berührungs- und Kraftfreiheit ergibt sich daraus, dass die Verfestigungswalzen 12 lediglich auf die hoch beanspruchten Bereiche 5 wirken und sich daher nur dort abstützen. Statt der beiden Verfestigungswerkzeuge 10 und 10a könnten auch drei oder mehr Verfestigungswerkzeuge 10, 10a... vorgesehen sein, die dann in gleichmäßigen Abständen um die Kurbelwelle 1 verteilt angeordnet sein sollten.

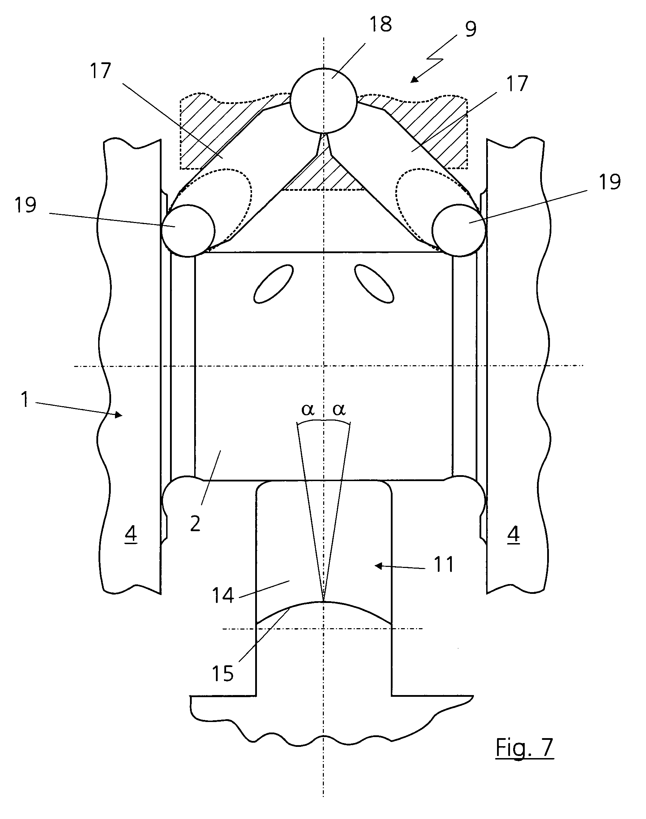

Eine weitere Ausführungsform der Vorrichtung 9 ist in Fig. 7 dargestellt. Dabei weist das Verfestigungswerkzeug 10 mehrere Stößel 17 auf, die über eine Umlenkrolle 18 in nicht näher dargestellter Art und Weise betätigt werden und damit die Kraft durch pulsierendes Hämmern auf die hoch beanspruchten Bereiche 5 der Kurbelwelle 1 aufbringen. An ihren mit den hoch beanspruchten Bereichen 5 in Verbindung stehenden Enden sind die Stößel 17 mit jeweiligen Kugeln 19 versehen. Die Gegenhalteeinrichtung 11, die der von dem Verfestigungswerkzeug 10 aufgebrachten Kraft entgegenwirkt, ist mit einer in diesem Fall als Gleitlager ausgebildeten Lagereinrichtung 15 versehen, die ebenfalls in der Lage ist, auch Kräfte aufzunehmen, die in einem von 90° verschiedenen Winkel auf die Oberfläche der Kurbelwelle 1 wirken. Selbstverständlich werden durch die Lagereinrichtung 15 auch senkrecht auf die Oberfläche der Kurbelwelle 1 wirkende Kräfte aufgenommen.

Die Ausführung der Lagereinrichtung 15 als Gleitlager ist im Falle der Ausführungsform des Verfestigungswerkzeugs 10 mit den Stößeln 17 eine gegenüber einem Wälzlager besser geeignete Ausführungsform, da sich durch das pulsierende Hämmern des Verfestigungswerkzeugs 10 bei der Verwendung eines Kugel- oder Rollenlagers als der Lagereinrichtung 15 Probleme hinsichtlich der Haltbarkeit desselben ergeben könnte. Hierbei sollten die beiden Flächen des Gleitlagers möglichst gut aneinander angepasst sein, wobei sich zwischen diesen Flächen Öl, Fett oder ein anderes geeignetes Schmiermittel befinden kann.

Durch das genannte Verfahren ergibt sich ein auf Torsion und Biegung beanspruchtes Bauteil, im vorliegenden Fall die Kurbelwelle 1, das nicht nur die sich aufgrund der Nitrierbehandlung ergebenden Vorteile, wie eine größere Oberflächenhärte und eine höhere Torsionsfestigkeit aufweist, sondern durch die Kaltverfestigung auch in den hoch beanspruchten Bereichen 5 eine größere Festigkeit, insbesondere ein höhere Biegefestigkeit, besitzt.

## Patentansprüche

1. Verfahren zur Erhöhung der Festigkeit eines auf Torsion und Biegung beanspruchten Bauteils, insbesondere einer Kurbelwelle (1), wobei in einem ersten Schritt im Wesentlichen das gesamte Bauteil mit einer Nitrierschicht (6) versehen wird, wobei in einem zweiten Schritt mittels einer spanabhebenden Bearbeitung in wenigstens einem hochbeanspruchten Bereich (5) des Bauteils die Nitrierschicht (6) zumindest teilweise entfernt wird, und wobei in einem dritten Schritt der wenigstens eine von der Nitrierschicht (6) befreite, hoch beanspruchte Bereich (5) des Bauteils mechanisch kaltverfestigt wird,
**dadurch gekennzeichnet, dass** von der Nitrierschicht (6) lediglich eine Verbindungsschicht (6a) entfernt wird.

2. Verfahren zur Erhöhung der Festigkeit eines auf Torsion und Biegung beanspruchten Bauteils, insbesondere einer Kurbelwelle (1), wobei in einem ersten Schritt im Wesentlichen das gesamte Bauteil mit einer Nitrierschicht (6) versehen wird, wobei in einem zweiten Schritt mittels einer spanabhebenden Bearbeitung in wenigstens einem hochbeanspruchten Bereich (5) des Bauteils die Nitrierschicht (6) zumindest teilweise entfernt wird, und wobei in einem dritten Schritt der wenigstens eine von der Nitrierschicht (6) befreite, hoch beanspruchte Bereich (5) des Bauteils mechanisch kaltverfestigt wird,
**dadurch gekennzeichnet, dass** zusätzlich zu der Nitrierschicht (6) auch weiteres Material des Bauteils (1) entfernt wird, um in dem wenigstens einen hochbeanspruchten Bereich eine Hinterschneidung (8) zu bilden.

3. Verfahren nach Anspruch 1 oder 2,
**dadurch gekennzeichnet, dass** nach der mechanischen Kaltverfestigung eine Endbearbeitung des Bauteils (1) hinsichtlich dessen Lage- und/oder Maßtoleranzen erfolgt.

4. Verfahren nach Anspruch 1, 2 oder 3,
**dadurch gekennzeichnet, dass** die mechanische Kaltverfestigung mittels Festwalzen durchgeführt wird.

5. Verfahren nach Anspruch 1, 2 oder 3,
**dadurch gekennzeichnet, dass** die mechanische Kaltverfestigung mittels Schlagverfestigen durchgeführt wird.

6. Verfahren nach einem der Ansprüche 1 bis 5,
**dadurch gekennzeichnet, dass** die Nitrierschicht (6) durch Drehen, Fräsen oder Schleifen entfernt wird.

7. Verfahren nach einem der Ansprüche 1 bis 6,
**dadurch gekennzeichnet, dass** als Bauteil eine Kurbelwelle (1) verwendet wird.

8. Verfahren nach Anspruch 7,
**dadurch gekennzeichnet, dass** der wenigstens eine hoch beanspruchte Bereich (5) ein Übergangsbereich von einem Hauptlager (2) oder Pleuellager (3) zu einer Kurbelwange (4) ist.

9. Verfahren nach Anspruch 8,
**dadurch gekennzeichnet, dass** der Übergangsbereich als tangierender oder hinterschnittener Radius ausgeführt wird.

10. Verfahren nach einem der Ansprüche 1 bis 9,
**dadurch gekennzeichnet, dass** bei der mechanischen Kaltverfestigung des hoch beanspruchten Bereichs (5) des Bauteils eine derartige Kraft aufgebracht wird, dass auf der Oberfläche des Bauteils Anrisse entstehen, wobei die Kraft gegenüber einer üblicherweise durch Festwalzen aufgebrachten Kraft um bis zu 40 % erhöht wird.

11. Vorrichtung zur mechanischen Kaltverfestigung eines auf Torsion und Biegung beanspruchten Bauteils, insbesondere einer Kurbelwelle (1), mit einem zur Aufbringung einer Kraft auf das Bauteil geeigneten Verfestigungswerkzeug (10) und mit einer die Kraft des wenigstens einen Verfestigungswerkzeugs (10) aufnehmenden Gegenhalteeinrichtung (11),
**dadurch gekennzeichnet, dass** die Gegenhalteeinrichtung (11) mittels einer Lagereinrichtung (15) derart gelagert ist, dass sie in der Lage ist, durch bei geringfügigen Schrägstellungen des Verfestigungswerkzeugs (12) durch dasselbe eingeleitete Kräfte aufzunehmen, die schräg auf die Oberfläche des Bauteils (1) wirken.

12. Vorrichtung nach Anspruch 11,
**dadurch gekennzeichnet, dass** das wenigstens eine Verfestigungswerkzeug (10) mehrere Verfestigungswalzen (12) aufweist.

13. Vorrichtung nach Anspruch 12,
**dadurch gekennzeichnet, dass** das wenigstens eine Verfestigungswerkzeug (10) mehrere Stößel (17) aufweist.

14. Vorrichtung nach einem der Ansprüche 11 bis 13,
**dadurch gekennzeichnet, dass** mehrere um den Umfang des zu bearbeitenden Bauteils versetzt angeordnete Verfestigungswerkzeuge (10,10a) vorgesehen sind, wobei das eine Verfestigungswerkzeug (10,10a) als Gegenhalteeinrichtung (11,11a) für das andere Verfestigungswerkzeug (10,10a) wirkt.

## Claims

1. A method for increasing the strength of a component subjected to torsional and flexural stress, in particular of a crankshaft (1), in a first step essentially the entire component being provided with a nitriding layer (6), in a second step the nitriding layer (6) being at least partially removed in at least one highly stressed region (5) of the component by means of cutting machining, and, in a third step, the at least one highly stressed component region (5) freed of the nitriding layer (6) being mechanically strain-hardened,
**characterized in that**
only a bonding layer (6a) is removed from the nitriding layer (6).

2. A method for increasing the strength of a component subjected to torsional and flexural stress, in particular of a crankshaft (1), in a first step essentially the entire component being provided with a nitriding layer (6), in a second step the nitriding layer (6) being at least partially removed in at least one highly stressed region (5) of the component by means of cutting machining, and, in a third step, the at least one highly stressed component region (5) freed of the nitriding layer (6) being mechanically strain-hardened,
**characterized in**
further material of the component (1) is also removed in addition to the nitriding layer (6), in order to form an undercut (8) in the at least one highly stressed region.

3. The method as claimed in claim 1 or 2,
**characterized in that**,
after the mechanical strain hardening, a final machining of the component (1) in terms of its positional and/or dimensional tolerances takes place.

4. The method as claimed in claim 1, 2 or 3,
**characterized in that**
the mechanical strain hardening is carried out by means of close rolling.

5. The method as claimed in claim 1, 2 or 3,
**characterized in that**
the mechanical strain hardening is carried out by means of impact hardening.

6. The method as claimed in one of claims 1 to 5,
**characterized in that**
the nitriding layer (6) is removed by turning, milling or grinding.

7. The method as claimed in one of claims 1 to 6,
**characterized in that**
the component used is a crankshaft (1).

8. The method as claimed in claim 7,
**characterized in that**
the at least one highly stressed region (5) is a transition region from a main bearing (2) or connecting rod bearing (3) to a crank web (4).

9. The method as claimed in claim 8,
**characterized in that**
the transition region is designed as a tangent radius or an undercut radius.

10. The method as claimed in one of claims 1 to 9,
**characterized in that**,
during the mechanical strain hardening of the highly stressed region (5) of the component, such a force is applied that incipient cracks occur on the surface of the component, the increase in the force lying up to 40% above the force usually applied by close rolling.

11. An apparatus for the mechanical strain hardening of a component subjected to torsional and flexural stress, in particular of a crankshaft (1), with a strengthening tool (10) suitable for applying a force to the component, and with a steading device (11) which absorbs the force of the at least one strengthening tool (10),
**characterized in that**
the steading device (11) is mounted by means of a bearing device (15) in such a way that it is capable of absorbing forces which are introduced by the strengthening tool (12) in the case of slight oblique positions of the latter and which act obliquely on the surface of the component (1).

12. The apparatus as claimed in claim 11,
**characterized in that**
the at least one strengthening tool (10) has a plurality of strengthening rollers (12).

13. The apparatus as claimed in claim 12,
**characterized in that**
the at least one strengthening tool (10) has a plurality of rams (17).

14. The apparatus as claimed in one of claims 11 to 13,
**characterized in that**
a plurality of strengthening tools (10, 10a) arranged, offset, around the circumference of the component to be machined are provided, one strengthening tool (10, 10a) acting as a steading device (11, 11 a) for the other strengthening tool (10, 10a).

## Revendications

1. Procédé pour accroître la tenue d'une pièce de mécanique sollicitée en torsion et courbure, notamment d'un vilebrequin (1), procédé dans lequel, au cours d'une première phase, essentiellement l'ensemble de la pièce est revêtu d'une couche de nitrure (6), procédé dans lequel, au cours d'une deuxième phase, on retire au moins partiellement la couche de nitrure (6) dans une zone de forte contrainte (5) de la pièce au moyen d'un traitement de réduction de la tension, et procédé dans lequel, au cours d'une troisième phase, ladite au moins une zone de forte contrainte (5) de la pièce, libérée de la couche de nitrure (6) est soumise à une finition mécanique à froid,
**caractérisé en ce que**,
l'on retire exclusivement une couche de liaison (6a) de la couche de nitrure (6).

2. Procédé pour accroître la tenue d'une pièce de mécanique sollicitée en torsion et courbure, notamment d'un vilebrequin (1), procédé dans lequel, au cours d'une première phase, essentiellement l'ensemble de la pièce est revêtu d'une couche de nitrure (6), procédé dans lequel, au cours d'une deuxième phase, on retire au moins partiellement la couche de nitrure (6) dans une zone de forte contrainte (5) de la pièce au moyen d'un traitement de réduction de la tension, et procédé dans lequel, au cours d'une troisième phase, ladite au moins une zone de forte contrainte (5) de la pièce, libérée de la couche de nitrure (6) est soumise à une finition mécanique à froid,
**caractérisé en ce que**,
l'on retire de la pièce de mécanique (1), en plus de la couche de nitrure (6) de la matière supplémentaire, pour effectuer un chanfrein (8) dans la zone de forte contrainte.

3. Procédé selon la revendication 1 ou 2,
**caractérisé en ce que**,
après la finition mécanique à froid, survient un traitement final de la pièce (1) au vu des tolérances de position et/ou de dimensions.

4. Procédé selon la revendication 1, 2 ou 3,
**caractérisé en ce que**,
la finition mécanique à froid est effectuée avec des cylindres fixes.

5. Procédé selon la revendication 1, 2 ou 3,
**caractérisé en ce que**,
la finition mécanique à froid est effectuée par martelage.

6. Procédé selon l'une des revendications 1 à 5,
**caractérisé en ce que**,
la couche de nitrure (6) est éliminée par tournage, fraisage ou polissage.

7. Procédé selon l'une des revendications 1 à 6,
**caractérisé en ce que**,
la pièce de construction utilisée est un vilebrequin (1).

8. Procédé selon la revendication 7,
**caractérisé en ce que**,
ladite au moins une zone de forte contrainte (5) est une zone de transition entre un palier principal (2) ou palier de bielle (3) avec un flasque de vilebrequin (4).

9. Procédé selon la revendication 8,
**caractérisé en ce que**,
la zone de transition présente des rayons tangentiels ou fraisés.

10. Procédé selon l'une des revendications 1 à 9,
**caractérisé en ce que**,
lors de la finition mécanique à froid de la zone de forte contrainte (5) de la pièce de construction, on applique une telle force, que des fissures apparaissent à la superficie de la pièce, procédé dans lequel, la force appliquée est majorée, jusqu'à 40% de la force habituellement appliquée par des cylindres fixes.

11. Dispositif pour accroître la tenue d'une pièce de mécanique sollicitée en torsion et courbure, notamment d'un vilebrequin (1), comportant un outil d'accroissement de la tenue (10) pour appliquer une force sur la pièce de construction et une contre-installation (11) de retenue de la force appliquée par ledit au moins un outil (10) d'accroissement de la tenue,
**caractérisé en ce que**,
la contre-installation (11) est agencée de telle manière que, lors d'un faible positionnement oblique de l'outil d'accroissement de la tenue (12), celle-ci est en mesure d'absorber des forces susceptibles de s'exercer obliquement sur la pièce de mécanique (1) au moyen d'une installation de palier (15).

12. Dispositif selon la revendication 11,
**caractérisé en ce que**,
ledit au moins un outil d'accroissement de la tenue (10) comprend plusieurs cylindres de finissage (12).

13. Dispositif selon la revendication 12,
**caractérisé en ce que**,
ledit au moins un outil d'accroissement de la tenue (10) comprend plusieurs pilons (17).

14. Dispositif selon l'une des revendications 11 à 13,
**caractérisé en ce que**,
plusieurs outils d'accroissement de la tenue (10, 10a), disposés autour de la périphérie de la pièce à traiter, sont prévus, procédé dans lequel l'un de ces outils d'accroissement de la tenue (10, 10a), est agencé pour agir comme installation de retenue (11, 11a) pour les autres outils d'accroissement de la tenue (10, 10a).
